(19)

**Europäisches Patentamt**
**European Patent Office**
**Office européen des brevets**

(11) **EP 4 111 766 B1**

(12) **EUROPEAN PATENT SPECIFICATION**

(45) Date of publication and mention
of the grant of the patent:
**16.04.2025 Bulletin 2025/16**

(21) Application number: **20922008.6**

(22) Date of filing: **25.02.2020**

(51) International Patent Classification (IPC):
**H04W 64/00** (2009.01)

(52) Cooperative Patent Classification (CPC):
**H04L 5/005; G01S 1/0428; H04L 5/0094;**
**H04W 52/242; H04W 52/283; H04W 52/36;**
**H04W 52/367; G01S 5/0205; H04W 52/10;**
**H04W 64/00**

(86) International application number:
**PCT/CN2020/076637**

(87) International publication number:
**WO 2021/168657 (02.09.2021 Gazette 2021/35)**

(54) **TRANSMIT POWER CONTROL FOR POSITIONING REFERENCE SIGNAL**

SENDELEISTUNGSREGELUNG ZUM POSITIONIEREN EINES REFERENZSIGNALS

COMMANDE DE PUISSANCE DE TRANSMISSION DE SIGNAL DE RÉFÉRENCE DE
POSITIONNEMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**04.01.2023 Bulletin 2023/01**

(73) Proprietor: **Nokia Technologies Oy**
**02610 Espoo (FI)**

(72) Inventors:
• **TAO, Tao**
**Shanghai 200120 (CN)**
• **KEATING, Ryan**
**Chicago, Illinois 60622 (US)**
• **PARK, Kyoungmin**
**Yongin City 16876 (KR)**
• **YOON, Daejung**
**91300 Massy (FR)**

(74) Representative: **Script Intellectual Property LLP**
**Suite J, Anchor House**
**School Close**
**Chandlers Ford**
**Eastleigh, Hampshire SO53 4DY (GB)**

(56) References cited:
CN-A- 104 521 273    CN-A- 110 536 438
US-A1- 2012 046 030    US-A1- 2013 188 510

• VIVO: "Remaining issues on UL RS design for
NR positioning", vol. RAN WG1, no. Reno,
Nevada, US; 20191118 - 20191122, 25 November
2019 (2019-11-25), XP051830703, Retrieved from
the Internet <URL:https://ftp.3gpp.org/tsg_ran/
WG1_RL1/TSGR1_99/Docs/R1-1913424.zip
R1-1913424.docx> [retrieved on 20191125]
• "3 Generation Partnership Project; Technical
Specification Group Radio Access Network;
Evolved Universal Terrestrial Radio Access (E-
UTRA); Physical layer procedures (Release 16)",
vol. RAN WG1, no. V16.0.0, 14 January 2020
(2020-01-14), pages 8 - 59, XP051860751,
Retrieved from the Internet <URL:ftp://
ftp.3gpp.org/Specs/archive/36_series/36.213/
36213-g00.zip 36213-g00_s00-s05.docx>
[retrieved on 20200114]

EP 4 111 766 B1

**(Cont. next page)**

- **QUALCOMM INCORPORATED: "Comparison of 5GC-LMF and RAN-LMC based Positioning", vol. RAN WG3, no. Chongqing, China; 20191014 - 20191018, 4 October 2019 (2019-10-04), XP051810037, Retrieved from the Internet <URL:https://ftp.3gpp.org/tsg_ran/WG3_lu/ TSGR3_105bis/Docs/R3-195824.zip R3-195824_(Local LMF Benefits).docx> [retrieved on 20191004]**

**Description**

**FIELD**

Embodiments of the present disclosure generally relate to the field of telecommunication and in particular, to methods, devices, apparatuses and computer readable storage medium for transmit power control for a positioning reference signal (PRS).

**BACKGROUND**

Determining the location or position of a mobile device that is accessing a wireless communication network may be useful for many applications including, for example, emergency calls, personal navigation, asset tracking, locating a friend or family member, etc. A work item was conducted in the third Generation Partnership Project (3GPP) for native positioning support in New Radio (NR) during Release 16 (Rel-16). As a result of that work, the following positioning solutions are specified for Rel-16 NR positioning, for example, Downlink Time Difference of Arrival (DL-TDOA), Uplink Time Difference of Arrival (UL-TDOA), Downlink Angle of Departure (DL-AoD), Uplink Angle of Arrival (UL-AoA), Enhanced Cell ID (E-CID), and Multi-cell Round Trip Time (Multi-RTT).

In particular, the work is to specify solutions to enable radio access technology (RAT) dependent (for both of the frequency range 1, FR1, and the FR2) and RAT independent NR positioning techniques. New positioning reference signals (PRSs) are introduced in downlink (DL) and uplink (UL). In the UL, a terminal device may transmit one or more PRSs to one or more network devices in neighbor cells which are not connected with the terminal device.

VIVO: "Remaining issues on UL RS design for NR positioning", 3GPP DRAFT; R1-1913424, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE, val. RAN WG1, no. Reno, Nevada, US; 20191118-20191122 25 November 2019 (2019-11-25), XP051830703 describese Uplink Sounding Reference Signal (SRS) enhancements to be used in support of positioning.

"3 Generation Partnership Project; Technical Specification Group Radio Access Network; Evolved Universal Terrestrial Radio Access (E-UTRA); Physical layer procedures (Release 16)", 3GPP STANDARD; TECHNICAL SPECIFICATION; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, val. RAN WG1, no. V16.0.0 14 January 2020 (2020-01-14), pages 8-59, XP051860751 describes SRS power control methods.

QUALCOMM INCORPORATED: "Comparison of 5GC-LMF and RAN-LMC based Positioning", 3GPP DRAFT; R3-195824_(LOCAL LMF BENEFITS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, val. RAN WG3, no. Chongqing, China; 20191014- 20191018 4 October 2019 (2019-1 0-04), XP05181 0037 describes use of local NR positioning in NG-RAN.

**SUMMARY**

In general, example embodiments of the present disclosure provide a solution for controlling a transmit power of a PRS. Embodiments that do not fall under the scope of the claims, if any, are to be interpreted as examples useful for understanding various embodiments of the disclosure.

The invention is set out in the appended claims.

It is to be understood that the summary section is not intended to identify key or essential features of embodiments of the present disclosure, nor is it intended to be used to limit the scope of the present disclosure. Other features of the present disclosure will become easily comprehensible through the following description.

**BRIEF DESCRIPTION OF THE DRAWINGS**

Some examples will now be described with reference to the accompanying drawings, where:

Fig. 1 illustrates an example communication environment in which examples of the present disclosure can be implemented;

Fig. 2 illustrates a signaling flow for controlling a transmit power of a PRS according to some examples;

Fig. 3 illustrates a flowchart of a method implemented at a first apparatus according to some example embodiments;

Fig. 4 illustrates a flowchart of a method implemented at a second apparatus according to examples;

Fig. 5 illustrates a simplified block diagram of an apparatus that is suitable for implementing examples; and

Fig. 6 illustrates a block diagram of an example computer readable medium in accordance with some examples.

Throughout the drawings, the same or similar reference numerals represent the same or similar element.

## DETAILED DESCRIPTION

Principle of the present disclosure will now be described with reference to some examples. It is to be understood that these examples are described only for the purpose of illustration and help those skilled in the art to understand and implement the present disclosure, without suggesting any limitation as to the scope of the disclosure. Examples described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on.

Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, an Integrated and Access Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other resource enabling a communication, and the like. In the following, a resource in both frequency domain and time domain will be used as an example of a transmission resource for describing some example embodiments of the present disclosure. It is noted that example embodiments of the present disclosure are equally applicable to other resources in other domains.

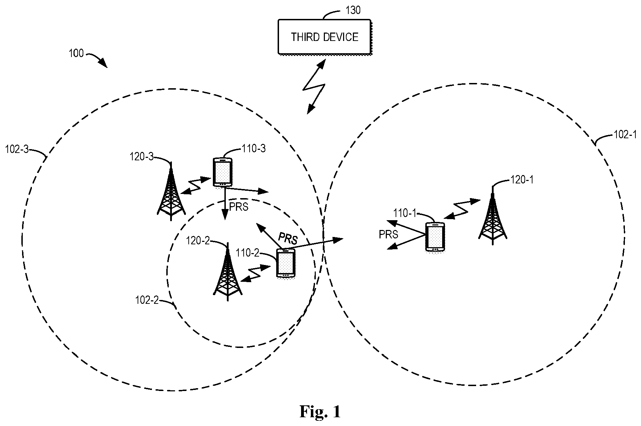

Fig. 1 shows an example communication environment 100 in which example embodiments of the present disclosure can be implemented. In the communication environment 100, one or more first devices 110-1, 110-2, 110-3 can communicate with one or more second devices 120-1, 120-2, 120-3. For purpose of discussion, the first devices 110-1, 110-2, 110-3 are collectively or individually referred to as first device 110 and the second devices 120-1, 120-2, 120-3 are collectively or individually referred to as second devices 120. In the example of Fig. 1, the first devices 110 are illustrated as terminal devices, and the second devices 120 are illustrated as network devices serving the terminal devices. Thus, the serving areas of the second devices 120-1 to 120-3 are called as cells 102-1, 120-2, and 102-3 (collectively or individually referred to as cells 102).

In the example of Fig. 1, the coverage of the cells 102-2 and 102-3 are of different cell sizes, while the coverage of the cells 102-1 and 102-3 are of a substantially same cell size. The cells 102-2, 102-3 with different cell coverage are shown to be overlapped in this example, although non-overlapping is also a possible case.

In general, a second device 120 serving a first device 110 is called as a serving device of the first device 110 and the cell 102 of the second device 120 is called as a serving cell of the first device 110. Other second devices 120 and their cells 102 in neighbor areas of the serving cell 102 may be called as neighbor second devices 120 (such as neighbor network devices) and neighbor cells 102 of that first device 110. As a specific example, the first device 110-1 is served by the second device 120-1. Then the second devices 120-2, 120-3 are neighbor second devices for the first device 110-1, and the cells 102-2, 102-3 are neighbor cells for the first device 110-2. Similarly, the first device 110-2 is served by the second device 120-2 and the first device 110-3 is served by the second device 120-3, and the neighbor second devices and neighbor cells for the first device 110-1, 110-2 can be determined accordingly.

It is to be understood that the number of devices and their connections shown in Fig. 1 are only for the purpose of illustration without suggesting any limitation. The environment 100 may include any suitable number of devices adapted for implementing embodiments of the present disclosure. Although not shown, it would be appreciated that one or more additional first devices may be located in the respective cells 102, and for each first device 110, more or less neighbor cells may be deployed in the environment 100. It would also be appreciated that in some examples, only the homogeneous network deployment or only the heterogeneous network deployment may be included in the environment 100.

Communications in the communication environment 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

In the environment 100, if the first device 110 is a terminal device and the second device 120 is a network device, a link from the second device 120 to the first device 110 is referred to as a downlink (DL), while a link from the first device 110 to the second device 120 is referred to as an uplink (UL). In DL, the second device 120 is a transmitting (TX) device (or a transmitter) and the first device 110 is a receiving (RX) device (or a receiver). In UL, the first device 110 is a TX device (or a transmitter) and the second device 120 is a RX device (or a receiver).

In some cases, for purpose of localization of a first device 110, the first device 110 may be configured to transmit a PRS to one or more neighbor second devices 120 and potentially also its serving second device 120 using corresponding resources. In such cases, a third device 130 is included in the environment 100 which is configured to determine and manage a location of the first devices 110. The third device 130 can communicate with one or more second network devices 120 in order to control the localization of the first devices 110. In some example embodiments, the third device 130 may be a location server for determining or managing locations of devices. For example, the third device 130 may be a location management function (LMF) in a core network (CN). As another example, the third device 130 may be a local location management component (LMC) in the radio access network (RAN).

As used herein, a reference signal (RS) is a signal sequence (also referred to as "RS sequence") that is known by both the transmitter and receiver. Among these various RSs, one or more of them may be used as PRSs for positioning the first device 110. An example of PRSs transmitted by the first device 110 to the second device 120 includes a sounding reference signal (SRS). It should be understood that example embodiments of the present disclosure cover the cases of using all possible reference signals that can be used to position the first device 110, such as Demodulation Reference Signal (DM-RS), Phase Tracking Reference Signal (PT-RS), a preamble for random access (transmitted in physical random access channel (PRACH) for example), or the like. The SRS transmitted may also be either specifically an SRS for positioning or a regular sounding SRS (e.g., Rel-15 SRS used for beam management).

A transmit power of the PRS is one of the aspects that need to be well controlled in order to satisfy high requirements related to device efficiency (such as power consumption, complexity, and the like) and network efficiency (such as signaling overhead, latency, scalability, and the like).

A transmit power for transmission of a signal by a terminal device (such as UE) may be controlled by its serving network device (such as a gNB). For example, if the terminal device is to transmit SRS to its serving network device, the serving network device may configure the terminal device with power control parameters and a reference signal for path loss measurement via radio resource control (RRC) signalling. The terminal device may determine a transmit power for transmission of the SRS to the network device based on the power control parameters and a path loss estimate by measuring the configured reference signal sent from the serving network device.

However, in the case where the terminal device transmits a PRS to one or more neighbor network devices with which the terminal device has no data connection established, it is difficult for the serving network device to properly control the transmit powers used by the terminal device for transmission of the PRS to the respective neighbor network devices. In particular, to control the transmit powers to the neighbor network devices, the serving network device may have to predict proper power control parameters for the neighbor network device(s) or proper reception beam(s) to be used by the neighbor network devices (so as to determine suitable reference signals sent by the neighbor network devices for path loss measurement). In addition, the determination of the power control parameters and reception beams for the neighbor network devices may result in a complicated process of negotiations among the serving network device, the terminal device, the neighbor network device, and the LMF, resulting in a large amount of signalling overhead among the devices and additional measurements and processing operations performed by the devices.

According to some example embodiments of the present disclosure, there is provided a solution for transmit power control for transmission of a PRS. In this solution, a first device is able to determine one or more power control parameters for transmission of a PRS autonomously. Specifically, the second device transmits positioning configuration information to the first device to indicate one or more target devices and a resource allocated for transmission of a PRS to the target device(s). The target device can be selected or requested by a third device (such as the LMF) and indicated to the second device.

With the configuration of the target device(s) for PRS transmission and the allocated resource, the first device autonomously determines a power control parameter indicating a received power of the PRS expected by the target device(s). In some example embodiments, this power control parameter is determined based on a received power of data transmission expected by the target device(s), which can be detected by the first device even if the first device has no connection established with the target device(s). At least based on this determined power control parameter, the first device determines a transmit power for transmission of the PRS to the target device(s) using the allocated resource.

Through this solution, the first device can achieve autonomous transmit power control. As such, the transmit power control for PRS transmission towards the target device(s) can be simplified, without introducing high signal overhead among the relevant devices and additional measurements and processing operations.

Example embodiments of the present disclosure will be described in detail below with reference to the accompanying drawings.

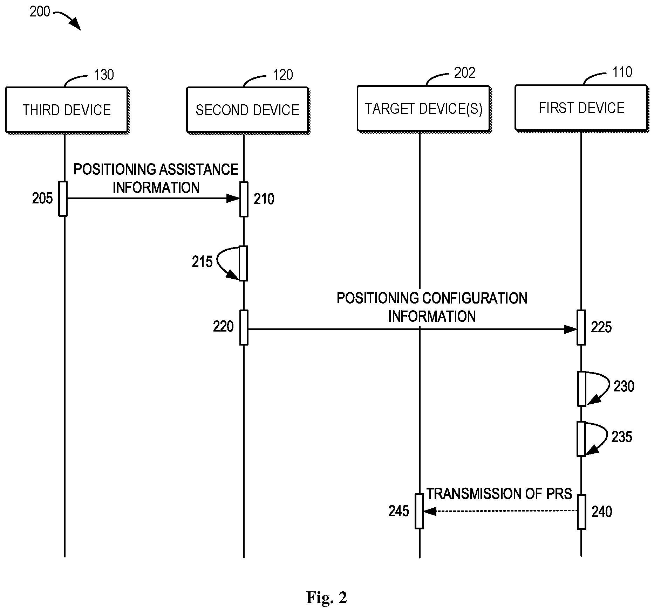

Reference is now made to Fig. 2, which shows a signaling flow 200 for transmit power control according to some example embodiments of the present disclosure. For the purpose of discussion, the signaling flow 200 will be described with reference to Fig. 1. The signaling flow 200 may involve a first device 110, a second device 120, a third device 130 in Fig. 1 and one or more target devices 202.

In the signaling flow 200, the second device 120 is a serving device of the first device 110. A target device 202 is a device to which a PRS is transmitted by the first device 110. In the environment 100 of Fig. 1, the target device(s) 202 may include one or more neighbor second devices 120 in neighbor cells of the first device 110. In some example embodiments, the target device(s) 202 may additionally or alternatively include the serving device of the first device 110.

In operation, the third device 130 may be configured to determine whether localization of the first device 110 is needed and determines which target device(s) 202 are expected to receive a PRS from the first device. In some example, the third device 130 may be a LMF or any device or functional component that is configured to manage and control localization of one or more first devices 110.

In the signaling flow 200, the third device 130 determines positioning assistance information associated with a first device 110 and transmits 205 the determined positioning assistance information to a second device 120 that serves the first device 110. The positioning assistance information at least indicates one or more target devices 202 to which a PRS is to be transmitted by the first device 110.

As an example, identities of one or more target devices 202 or their serving cells may be included in the positioning assistance information. In some examples, the indication of one or more of the target device(s) 202 may be provided to the second device 120 in an implicit way. For example, the third device 130 may decide to request the second device 120 to configure the first device 110 with spatial relation information (represented as "spatialRelationInfo") associated with one or more specific target devices 202. The spatial relation information may indicate a reference signal to be transmitted from the target device(s) 202 to the first device 110. In this case, the first device 110 configured with the spatial relation information may transmit a PRS to that target device(s) 202. Thus, the configuration of the spatial relation information may be considered as implicit positioning assistance information to indicate one or more target devices 202.

In some examples, the positioning assistance information may be determined by the third device 130 to further include grouping information indicating one or more groups of target devices 202 as targets of transmission of the PRS from the first device 110. As configured in the grouping information or as predefined at the first device 110, a group of target devices 202 may have some commonality with respect to the transmission of the PRS by the first device 110. For example, a group of target devices 202 may be associated with same transmit power control for the first device 110, same resource allocation for transmission of the PRS, and/or a same beam (for example a same spatial transmission filter) of the first device 110. In other words, target device 202 in the same group may be expected to receive the PRS from the first device 110 with same or similar transmit powers, using the same allocated resource, and/or using the same beam for transmission.

Grouping the target devices 202 may facilitate the transmission of the PRS at the first device 110, as will be discussed in detail below. In some examples, one target device 202 may be configured as an anchor device in a group of target devices 202. In some examples, the configuration of the anchor device may not be needed in some cases. The use of the anchor device will be further discussed in the following.

The third device 130 may determine which devices in the environment 100 can be grouped together as target devices in a same group according to various criteria. In some example embodiments, for a certain first device 110, the third device 130 may group two or more second devices 120 in the environment 100 based on distances between the first device 110 and the respective second devices 120, beams of the first device 110 for reception of signals from the respective second devices 120, reference signal received powers (RSRPs) measured by the first device 110 from the respective devices 120, and/or the like. The second devices 120 with same or similar distances to the first device 110, same or similar beams at the first device 110, same or similar RSRPs measured by the first device 110 may be grouped together as target devices 202. For example, to determine location of the first device 110-1 served by the second device 120-1, the third device 130 may determine that the second devices 120-2, 120-3 can be grouped together as target devices for transmission of the PRS.

The second device 120 receives 210 the positioning assistance information from the third device 130. According to the positioning assistance information, the second device 120 may at least determine which first device 110 is to transmit a PRS and to which one or more target device(s) 202 the PRS is transmitted. The second device 120 allocates 215 one or more resources to the first device 110 for transmission of the PRS. The resource(s) may be allocated from a resource set that is configured for transmission of the PRS. In some example embodiments, the second device 120 may allocated the whole resource set for transmission of the PRS.

The resource may be allocated per target device 202. For example, for each of the one or more target devices 202 indicated in the positioning assistance information, the second device 120 may allocate one or more resources or the whole resource set for that target device 202. In some examples where the positioning assistance information includes grouping information indicating one or more groups of target devices 202, the resource allocation may be performed per group when one or more of the groups of target devices 202 are associated with same resource allocation. For example, the second device 120 may allocate one or more resources or the whole resource set for a group of target devices 202. Thus, a resource may be allocated for transmission of the PRS to a specific target device 202 or a group of target devices 202.

In some examples, the second device 120 may allocate the resource(s) or resource set for transmission of the PRS to an anchor device in the group of target devices 202. The first device 110 can determine from such resource allocation that the same allocated resource(s) or resource set is used for transmission of the PRS to one or more other anchor device in the same group.

With the resource(s) allocated, the second device 120 transmits 220 positioning configuration information to the first device 110. The positioning configuration information at least indicates one or more target devices 202 to which a PRS is to be transmitted by the first device 110 and one or more resource(s) or resource set allocated for transmission of the PRS to the one or more target devices 202.

Similar to the positioning assistance information, the positioning configuration information may include identities of the one or more target devices 202 or their serving cells to explicitly indicate the target device(s) 202 and an indication of the resource(s) or resource set allocated to the specific target devices 202. In some example embodiments, one or more target devices 202 may be implicitly indicated to the first device 110 by configuring the first device 110 with the spatial relation information associated with the target device(s) 202. In some examples, the positioning configuration information may further include the grouping information related to one or more groups of target devices 202 as provided by the third device 130.

In some examples, the positioning configuration information may be transmitted to the first device 110 according to a NR Positioning Protocol A (NRPPA) as defined in the 3GPP specifications. However, it is appreciated that in other examples, the positioning configuration information may be transmitted using any other protocols that are currently available or to be developed in the future.

Different from solutions where the first device 110 is only informed of the resources (time and/or frequency locations) on which a PRS is to be transmitted, in exampleswith the positioning configuration information, the first device 110 can be informed of specific target device(s) 202 to which a PRS is to be transmitted as well as which resource(s) or resource set can be used to perform the transmission.

In some examples, in addition to transmitting the positioning configuration information to the first device 110, the second device 120 may also provide the positioning configuration information to the target device(s) 202, so that the target device(s) 202 can determine on which resource(s) a PRS is to be expected. In someexamples, the second device 120 may transmit the positioning configuration information to the third device 130 which may then forward the positioning configuration information to the target device(s) 202. Alternatively, the second device 120 may also transmit the positioning configuration information directly to the target device(s) 202 via the communication link therebetween.

In some cases, a part of the positioning configuration information related to a specific target device 202 is transmitted to that target device 202 by either the second device 120 or the third device 130. In some other cases, the part(s) of the positioning configuration information related to one or more other target devices 202 may also be provided to a target device 202 so that this target device 202 can perform overhearing of the PRS targeted to the one or more other target devices 202 based on the positioning configuration information. The overhearing at the target device 202 will be described in detail below.

After receiving 225 the positioning configuration information from the second device 120, the first device 110 determines 230 one or more power control parameters and determines 235, based on the determined one or more power control parameters, a transmit power for transmission of the PRS to one or more target device(s) 202 indicated in the positioning configuration information.

In examples, the first device 110 autonomously determines one or more power control parameters used in determining the transmit power. The power control parameter(s) and the transmit power may be determined per target device 202 or per group of target devices 202 (if a group of target devices 202 are associated with same transmit power control). In the latter case, the first device 110 may determine the power control parameter(s) and then the transmit power with respect to a target device 202 acting as an anchor device in a group. The transmit powers for transmission of the PRS to one or more other devices in the group may be determined to be equal to the transmit power determined for the target device 202.

The determination of the power control parameter(s) and then the transmit power will be described in detail below.

In examples of the present disclosure, to determine a transmit power for transmission of the PRS to a specific target device 202, the first device 110 determines a first power control parameter indicating a received power of the PRS that is expected by that target device 202. To facilitate following description, the first power control parameter may be represented as "P0_PRS." The first power control parameter is determined based on a received power of data transmission expected by the target device 202, which can be determined or detected by the first device 110.

The received power of data transmission expected by the target device 202 indicates the expected received power in transmitting data to the target device 202, such as transmitting data in a physical uplink shared channel (PUSCH) to the target device 202. The received power of data transmission expected by the target device 202 may be represented as "P0_PUSCH_nominal" in some examples.

In some examples, the received power of data transmission expected by the target device 202 "P0_PUSCH_nominal" may be included in system broadcast information broadcasted by the target device 202. For example, the received power of data transmission expected by the target device 202 may be broadcasted in a physical broadcast channel (PBCH). The first device 110 may decode the system broadcast information (such as the PBCH) from the target device 202 in order to obtain the received power of data transmission expected by the target device 202 "P0_PUSCH_nominal." In some example embodiments, the first device 110 may detect a reference signal (which may be configured for decoding a synchronization signal block (SSB)) transmitted by the target device 202 and use the reference signal to decode the system broadcast information.

In some cases, the decoding of the system broadcast information of the target device 202 may be omitted so as to improve efficiency and processing resource saving at the first device 110. Specifically, the first device 110 may determine the received power of data transmission expected by the target device 202 "P0_PUSCH_nominal" to be equal to a received power of data transmission expected by the second device 120. Since the second device 120 is a serving device for the first device 110, the received power of data transmission expected by the second device 120 may generally have been determined by the first device 110. Thus, the additional decoding of the system broadcast information from the target device 202 may be avoided. The reusing the received power of data transmission expected by the second device 120 is appropriate since the expected received powers of the network devices (for example, the second device 120 serving the first device 110 and the target device 202) may generally set as same or similar values.

With the received power of data transmission expected by the target device 202 "P0_PUSCH_nominal" determined, the first device 110 may determine the first power control parameter "P0_PRS" by directly determining the received power of the PRS expected by the target device 202 to be equal to the received power of data transmission expected by the target device 202 "P0_PUSCH_nominal."

Alternatively, the first device 110 may determine to add a power offset to the the received power of data transmission expected by the target device 202 "P0_PUSCH_nominal" to obtain the received power of the PRS expected by the target device 202, which may be represented as P0_PRS = P0_PUSCH_nominal + P0_PRS_offset, where P0_PRS_offset represents the power offset. The power offset may be dedicated to one or more target devices 202 or may be common for all the target devices 202. The power offset may be predefined or may be configured by the second device 120 through transmission of an indication of the power offset. For example, the indication of the power offset may be received from the second device 120 via RRS configuration signalling.

In some examples, if the first device 110 determines that its serving device 120 and the target device 202 provides cells with same uplink coverage across cells (for example, the second devices 120-1, 120-3 with the same cell coverage in Fig. 1), the first device 110 may decide to determine the received power of the PRS expected by the target device 202 by adding the power offset to the received power of data transmission expected by the target device 202 "P0_PUSCH_nominal." In some examples, the first device 110 may be configured optionally with the behavior of adding the power offset.

In order to determine the transmit power, the first device 110 may autonomously determine a further power control parameter (referred to as a second power control parameter) to indicate a path loss between the first device 110 and a target device 202. In a possible transmit power control mechanism where the transmit power is controlled by the second device, a specific reference signal for measuring the path loss may be configured by the second device. In examples, in order to achieve autonomous transmit power control, the first device 110 may determine the path loss between the first device 110 and the target device 202 by reusing one or more other reference signals that are configured for other purposes and can be detected by the first device 110.

In an example, the first device 110 may measure the reference signal received by the first device 110 to obtain the system broadcast information from the target device 202 as mentioned above, which may be a configured SSB. For purpose of discussion, such reference signal may sometimes be referred to as a first reference signal. The first device 110 may measure the received power of the first reference signal. The transmit power of the first reference signal may be determined as to be equal to the transmit power of a same type of reference signal received from the second device 120 (i.e., the one used to obtain system broadcast information from the second device 120), which transmit power may be signaled to the first device. In some other examples, the transmit power of the first reference signal from the target device 202 may be a predetermined value or may be otherwise signaled to the first device 110. The path loss between the first device 110 and the target device 202 may be determined based on a difference between the transmit power and the received power of the first reference signal.

In an example, in order to determine the path loss between the first device 110 and the target device 202, the first device 110 may additionally or alternatively measure a further reference signal (referred to as a second reference signal) from the target device 202. The second reference signal may be indicated in spatial relation information associated with the target device 202 that is configured to the first device 110. The second reference signal may be designed for the first device 110 to determine a beam for transmission to the target device 202 as the detection of the second reference signal can indicate a spatial relation from the first device 110 to the target device 202.

The first device 110 may measure the received power of the second reference signal. The transmit power of the second reference signal may be a predetermined value or set to be a same value as the transmit power of the first reference signal which may be known by the first device 110. The path loss between the first device 110 and the target device 202 may be determined based on a difference between the transmit power and the received power of the second reference signal. In some examples, the first device 110 may determine the path loss based on both the differences between the transmit powers and the received powers of the first and second reference signals, for example, by averaging the two differences.

The first device 110 may determine the transmit power for transmission of the PRS to the target device 202 using the allocated resource based on the first and second power control parameters above. The path loss indicated by the second power control parameter may be added to the received power of the PRS expected by the target device so as to compensate the loss in the communication path from the first device 110 to the target device 202. The transmit power may be determined in various methods based on the first and second power control parameters. For example, the transmit power may be determined based on a sum of the path loss indicated by the second power control parameter and the received power of the PRS expected by the target device. In another example, the path loss and/or the received power may be weighted and then summed up. The weight(s) for the path loss and/or the received power may be determined as a predetermined value(s).

In some examples, one or more other power control parameters that can be autonomously determined by the first device 110 may also be used in order to determine a more proper transmit power. For example, the determination of the transmit power may be based on a PRS bandwidth expressed in number of resource blocks for a transmission occasion.

In some examples, in order to balance the possible interference caused to other first devices in the cell of the second device 120 and the hearability of the PRS by the target device(s) 202, the second device 120 may indicate a maximum transmit power as a constraint to the transmit power determined for transmission of the RPS.

The maximum transmit power may be configured per target device or per group of target device, and/or per allocated resource so as to put a cap on the transmit power determined by the first device 110 towards or intended for a particular target device 202 (or a group of target devices 202) using one or more particular allocated resources. Though a single value of the maximum transmit power may be given within the transmission of the reference signal, for the purpose of positioning, it may not be appropriate to set the same constraint to the transmission of the PRS towards all target devices on all the allocated resources. In some examples, the second device 120 can control the interference and the hearability of the PRS by setting different maximum transmit powers for different target devices and/or for different allocated resources. When determining a transmit power for transmission of the PRS to a target device 202 using the allocated resource, the first device 110 may not determine the transmit power to exceed the maximum transmit power. Thus, the determined transmit power may always be either less than or equal to the maximum transmit power.

As a specific example, if the first device 110 transmits a PRS on active UL bandwidth part (BWP) $b$ of carrier $f$ of a certain target device 202 with a cell $c$, the first device 110 determines the PRS transmission power $P_{PRS,b,f,c}(i, q_s)$ in PRS transmission occasion $i$ as

$$P_{\text{PRS},b,f,c}(i, q_s) = \min\begin{cases} P_{\text{CMAX},f,c}(i), \\ P_{\text{0\_PRS},b,f,c}(q_s) + 10\log_{10}(2^{\mu} \cdot M_{\text{PRS},b,f,c}(i)) + \alpha_{\text{PRS},b,f,c}(q_s) \cdot PL_{b,f,c}(q_d) \end{cases} \quad [\text{dBm}]$$

where,

- $P_{\text{CMAX},f,c}(i)$ is the maximum transport power for carrier $f$ of cell $c$ in PRS transmission occasion $i$ ;
- $P_{\text{O,PRS},b,f,c}(q_s)$ is the received power of the PRS expected by the target device 202 for active UL BWP $b$ of carrier $f$ of cell $c$, and $q_s$ is the PRS resource set identity, $P_{\text{O,PRS},b,f,c}(q_s)$ may be determined from P0_PUSCH_nominal as indicated in PBCH from the target device 202;
- $M_{\text{PRS},b,f,c}(i)$ is a bandwidth expressed in number of resource blocks for PRS transmission occasion $i$ on active UL BWP $b$ of carrier $f$ of cell $c$, and $\mu$ is a sub-carrier spacing (SCS) configuration;
- $PL_{b,f,c}(q_d)$ is a path loss estimate in dB calculated by the first device 110 in case of an active DL BWP of cell $c$, using RS resource indexed $q_d$ in a serving or non-serving cell for PRS resource set $q_s$; and

- $\alpha_{\text{PRS},b,f,c}(q_s)$ may be a predetermined value for active UL BWP $b$ of carrier $f$ of cell $c$ and PRS resource set $q_s$ and may sometimes be set as 1.

It would be appreciated that the above equation for determining the transmit power of the PRS is provided for purpose of illustration. In other examples, the transmit power of the PRS may be determined in any other manners based on one or more of the power control parameters and related factors provided in the example embodiments of the present disclosure.

With the transmit power determined for a target device 202, the first device 110 may transmit 240 the PRS to the target device 202 with the corresponding determined transmit power using the allocated resource. In the case where the grouping information is provided from the second device 120 in the positioning configuration information, if a group of target devices 202 are associated with same transmit power control, the first device 110 may transmit the PRS to each of the group of target devices 202 using the same transmit power determined for the anchor device in the group. In some examples, if the group of target device 202 are alternatively or additionally associated with same resource allocation, the first device 110 may transmit the PRS to each of the group of target devices 202 using the same resource allocated by the second device 120 with respect to the anchor device in the group. In some further examples, if the group of target device 202 are alternatively or additionally associated with a same beam, the first device 110 may transmit the PRS to each of the group of target devices 202 using a same beam.

Before transmitting the PRS to a target device 202, the first device 110 may determine a beam for transmission so as to improve the probability of successful reception and decoding of the PRS (i.e., the hearability of the PRS) at the target device 202 and thus improve the positioning accuracy. In some examples, the first device 110 may determine a beam (referred to as a "first beam") for reception of system broadcast information (such as the PBCH) from the target device 202. The first beam may be the one that can be used to successfully detect the reference signal used to obtain the system broadcast information (which is referred to as the first reference signal in some of the example embodiments discussed above).

Such a first beam has been determined when the first device 110 performs detection and measurement on at least the first reference signal, although in some cases related to FR1, the transmit beamforming can be skipped to save resources). The first device 110 then can use the determined first beam to determine a beam (referred to as a "second beam") for transmission of the PRS to the target device 202. For example, the direction of the second beam may be determined to be the same as the determined first beam, as the target device 202 may probably perform signal reception in the same direction. As such, the determining of the second beam for the PRS may be simplified, which can further reduce latency and resource consumption in transmitting the PRS.

In some examples, the first device 110 may provide an indication of the first beam or an indication of the determined second beam to the target device 202, which can help the target device 202 to determine an appropriate beam for receiving the PRS from the first device 110.

It is noted that according to some transmit power control mechanism where the power control parameters are configured by the serving device, the power control parameters may be common for a resource set for transmission of the PRS. This is contrasted with the fact that within one resource set for transmission of PRS, the first device is allowed to use different beams for transmission towards different target devices as the first device may be configured with spatial relation information per resource in the resource set. According to the autonomous transmit power control in the example embodiments of the present disclosure, the first device has more flexibility in determining how the PRS is transmitted in addition to the transmit power of the PRS.

At the receiving side of the PRS, the target device 202 may receive 245 the PRS transmitted from the first device 110. The target device 202 may perform positioning measurement on the first device 110 based on the received PRS. For example, the target device 202 may measure the distance between the first device 110 and the target device 202, or any other suitable positioning parameters that can be used to position the first device 110. Afterwards, the target device 202 may transmit the result of the positioning measurement to the third device 130. The third device 130 can determine the location of the first device 110 based on the measurement results from a plurality of target devices 202.

As mentioned above, the positioning configuration information related to one or more other target device(s) 202 may be provided to a certain target device 202 to enable overhearing of the PRS targeted to the other target device(s) 202. Specifically, with the positioning configuration information related to one or more other target device(s) 202, the target device 202 may determine on which resource(s) the PRS may be communicated although the PRS on that resource(s) is intended for the other target device(s) 202. The target device 202 may try to receive the PRS on that resource(s). If the PRS can be received, the target device 202 may also perform positioning measurement on the first device 110 based on the PRS overhead from the resource(s) allocated with respect to the other target device(s) 202.

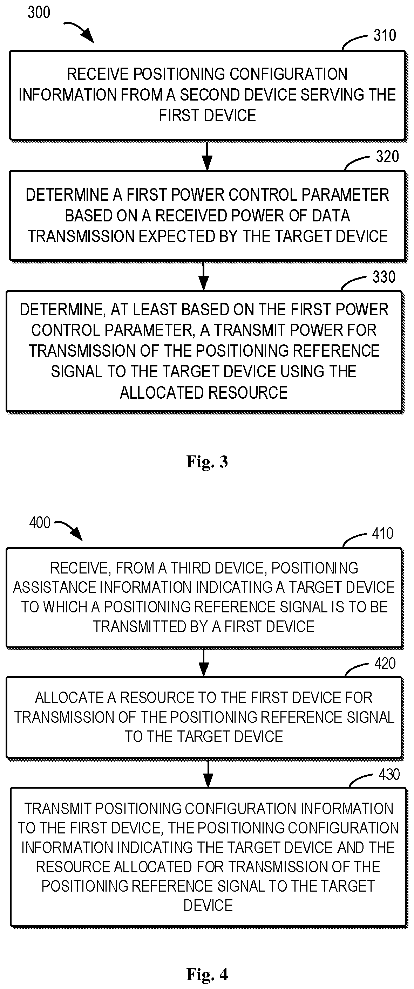

Fig. 3 shows a flowchart of an example method 300 implemented at a first device in accordance with some examples. For the purpose of discussion, the method 300 will be described from the perspective of the first device 110 with respect to Fig. 1 and Fig. 2.

At block 310, a first device 110 receives positioning configuration information from a second device 120 serving the first device 110. The positioning configuration information at least indicates a target device 202 to which a PRS is to be transmitted by the first device 110 and a resource allocated for transmission of the PRS to the target device 202. In some embodiments, among the positioning configuration information, the one or more target devices 202 may be determined by a third device 130 (for example, a LMF) which control and manage localization of the first device 110, and the resource are allocated by the second device 120.

At block 320, the first device 110 determines a first power control parameter based on a received power of data transmission expected by the target device 202. The first power control parameter is determined to indicate a received power of the PRS expected by the target device 202.

In some examples, the received power of data transmission expected by the target device 202 may be determined by decoding system broadcast information from the target device 202.

In some examples, the first device 110 may determine the received power of data transmission expected by the target device 202 to be equal to a received power of data transmission expected by the second device 120. The received power of data transmission expected by the second device 120 may have been obtained by the first device 110 from, e.g., system broadcast information transmitted from the second device 120.

At block 330, the first device 110 determines, at least based on the first power control parameter, a transmit power for transmission of the PRS to the target device 202 using the allocated resource.

In some examples, in addition to the first power control parameter, the first device 110 may further determine a second power control parameter to indicate a path loss between the first device 110 and the target device 202. In some examples, the first device 110 may determine the path loss between the first device 110 and the target device 202 by measuring a reference signal for other purposes, for example when the first device 110 is not configured with the specific reference signal for path loss measurement.

In some examples, the first device 110 may measure a first reference signal received by the first device 110 for obtaining system broadcast information from the target device 202, for example, to determine a received power of the first reference signal. The first reference signal may be received in a synchronization signal block. Alternatively, or in addition, the first device 110 may measure a second reference signal indicated in spatial relation information associated with the target device 202, for example, to determine a received power of the second reference signal that is transmitted from the target device 202. The path loss may be determined, e.g., based on a difference between the transmit power and the received power of the first reference signal and/or a difference between the transmit power and the received power of the second reference signal.

In some examples, the first device 110 may further obtain an indication of a maximum transmit power for transmission of the PRS to the target device 202 using the allocated resource. The transmit power may not be determined to exceed the maximum transmit power. The maximum transmit power may be configured per target device or per group of target device, and/or per allocated resource. By setting the maximum transmit power, the second device 120 may be able to or attempt to balance the possible interference caused to other first devices in the cell of the second device 120 and the hearability of the PRS by the target device 202.

In some examples, the positioning configuration information may further indicate a group of devices comprising the target device 202. If the target device 202 is configured as an anchor device in the group of devices, and the group of devices are associated with same transmit power control, then after determining the transmit power for the target anchor device 202, the first device 110 may determine a transmit power(s) for transmission of the PRS to one or more other devices in the group to be equal to the transmit power determined for the target device 202.

The first device 110 may transmit the PRS to the target device 202 with the corresponding determined transmit power using the allocated resource.

In some examples, if the group of devices including the target device 202 are associated with same resource allocation, in transmitting the PRS, the first device 110 may transmit the PRS to each of the group of devices using the resource allocated for the target device 202.

Alternatively, or in addition, if the group of devices including the target device 202 are associated with the same beam, the first device 110 may transmit the PRS to each of the group of devices with the same beam. An anchor device may not be configured if the group of devices are only associated with the same beam.

In some examples, to transmit the PRS to the target device 202, the first device 110 may determine a corresponding beam for transmission (referred to as a second beam herein). The second beam may be determined based on the beam (referred to as a first beam herein) for reception of system broadcast information from the target device 202. For example, the direction of the second beam may be determined to be the same as the determined first beam, as the target device 202 may probably perform signal reception in the same direction, which can improve the hearability of the PRS by the target device 202. Further, additional measurement may be avoided in determining the second beam for the PRS, which can further reduce latency and resource consumption in transmitting the PRS.

In some examples, the first device 110 may be a terminal device, the second device 120 and the target device 202 may be network devices, and the third device 130 may be a LMF in CN or an LMC. In some examples, the target device 202 may be same as the second device 120. In another example, the second device 120 may be one of the group of devices indicated to the first device 110. In some examples, the target device 202 may be different from the second device 120, for example, may be a network device serving a neighbor cell,

Fig. 4 shows a flowchart of an example method 400 implemented at a second device in accordance with some examples. For the purpose of discussion, the method 400 will be described from the perspective of the second device 120 with respect to Fig. 1 and Fig. 2.

At block 410, a second device 120 receives, from a third device 130 such as a LMF, positioning assistance information indicating a target device 202 to which a PRS is to be transmitted by a first device 110. The second device 120 is a serving device for the first device 110. As a device for controlling and managing localization of the first device 110, the third device 130 can decide which target device(s) 202 is expected to receive a PRS from the first device 110.

At block 420, the second device 120 allocates a resource to the first device 110 for transmission of the PRS to the target device 202. As the serving network, the second device 120 is configured for resource allocation for the transmission of the PRS. After determining the target device 202 and the allocated resource, at block 430, the second device 120 transmits positioning configuration information to the first device 110. The positioning configuration information is determined to indicate the target device 202 and the resource allocated for transmission of the PRS to the target device 202.

In some examples, the positioning configuration information may be further provided by the second device 120 to the target device 202 directly or via the third device 130 as a relay. In some examples, positioning configuration information related to a certain target device 202 of the first device 110 may be provided to one or more other target devices 202. The one or more other target devices 202 can then perform overhearing of the PRS transmitted to the certain target device 202 on the corresponding allocated resources as indicated in the positioning configuration information.

To facilitate the determination of the transmit power at the first device 110, in some example embodiments, the second device 120 may further transmit an indication of a power offset associated with the target device 202 for determining the first power control parameter. Alternatively or in addition, in some examples, the second device 120 may further transmit an indication of a maximum transmit power for transmission of the PRS, so as to put a cap on the transmit power determined by the first device 110 towards a particular target device 202 or a group of target devices 202 using one or more particular allocated resources.

In some examples, the first device 110 may be a terminal device, the second device 120 and the target device 202 may be network devices, and the third device 130 may be a LMF in CN or an LMC.

In some examples, a first apparatus capable of performing any of the method 300 (for example, the first device 110) may comprise means for performing the respective operations of the method 300. The means may be implemented in any suitable form. For example, the means may be implemented in a circuitry or software module. The first apparatus may be implemented as or included in the first device 110.

In some examples, the first apparatus comprises means for: receiving positioning configuration information from a second apparatus (e.g., implemented as or included in the second device 120) serving the first apparatus, the positioning configuration information at least indicating a target apparatus to which a positioning reference signal is to be transmitted by the first apparatus and a resource allocated for transmission of the positioning reference signal to the target apparatus; determining a first power control parameter based on a received power of data transmission expected by the target apparatus, the first power control parameter indicating a received power of the positioning reference signal expected by the target apparatus; and determining, at least based on the first power control parameter, a transmit power for transmission of the positioning reference signal to the target apparatus using the allocated resource.

In some examples e, the means for determining the transmit power further comprises means for: determining a path loss between the first apparatus and the target apparatus based on one of the following: measurement of a first reference signal in a synchronization signal block used to obtain system broadcast information from the target apparatus, and measurement of a second reference signal from the target apparatus, the second reference signal being indicated in spatial relation information associated with the target apparatus; determining a second power control parameter based on the measured path loss; and determining the transmit power further based on the second power control parameter.

In some examples, the means for determining the transmit power further comprises means for: receiving, from the second apparatus, an indication of a maximum transmit power for transmission of the positioning reference signal to the target apparatus using the allocated resource; and determining the transmit power such that the determined transmit power is less than or equal to the maximum transmit power.

In some examples, the means for determining the first power control parameter comprises means for: receiving, from the second apparatus, an indication of a power offset associated with the target apparatus; and determining the first power control parameter by adding the power offset to the received power of data transmission expected by the target apparatus.

In some examples, the first apparatus further comprises means for decoding system broadcast information from the target apparatus; and obtaining the received power of data transmission expected by the target apparatus from the decoded system broadcast information.

In some examples, the first apparatus further comprises means for: determining the received power of data transmission expected by the target apparatus to be equal to a received power of data transmission expected by the second apparatus, wherein the received power of data transmission expected by the second apparatus is obtained from decoded system broadcast information from the second apparatus.

According to the invention, the positioning configuration information further indicates a group of apparatuses comprising the target apparatus. According to the invention, the first apparatus further comprises means for performing least one of the following: in accordance with a determination that the target apparatus is an anchor apparatus for the group of apparatuses, determining transmit powers for transmission of the positioning reference signal to the group of apparatuses to be equal to the transmit power determined for the target apparatus; in accordance with a determination that the target apparatus is the anchor apparatus, transmitting the positioning reference signal to the group of apparatuses using the resource allocated for the target apparatus; and transmitting the positioning reference signal to the group of apparatuses with a same beam.

In some examples, the first apparatus further comprises means for: determining a first beam for reception of system broadcast information from the target apparatus; and determining a second beam for transmission of the positioning reference signal to the target apparatus based on the determined first beam.

In some examples, the first apparatus further comprises means for performing other operations in some example embodiments of the method 300. In some examples, the means comprises at least one processor; and at least one memory including computer program code, the at least one memory and computer program code configured to, with the at least one processor, cause the performance of the first apparatus.

In some examples, a second apparatus capable of performing any of the method 400 (for example, the second device 120) may comprise means for performing the respective operations of the method 400. The means may be implemented in any suitable form. For example, the means may be implemented in a circuitry or software module. The second apparatus may be implemented as or included in the second device 120.

In some examples, the second apparatus comprises means for receiving, from a third apparatus (e.g. implemented as or included in the third device 130), positioning assistance information indicating a target apparatus to which a positioning reference signal is to be transmitted by a first apparatus (e.g., implemented as or included in the first device 110) served by the second apparatus; allocating a resource to the first apparatus for transmission of the positioning reference signal to the target apparatus; and transmitting positioning configuration information to the first apparatus, the positioning configuration information indicating the target apparatus and the resource allocated for transmission of the positioning reference signal to the target apparatus.

In some examples, the second apparatus further comprises means for: providing the positioning configuration information to the target apparatus.

In some examples, the second apparatus further comprises means for: transmitting, to the first apparatus, an indication of a power offset associated with the target apparatus for determining a first power control parameter, the first power control parameter indicating a received power of the positioning reference signal expected by the target apparatus.

In some examples, the second apparatus further comprises means for: transmitting, to the first apparatus, an indication of a maximum transmit power for transmission of the positioning reference signal to the target apparatus using the allocated resource.

In some examples, the second apparatus further comprises means for performing other operations in some example embodiments of the method 400. In some examples, the means comprises at least one processor; and at least one memory including computer program code, the at least one memory and computer program code configured to, with the at least one processor, cause the performance of the second apparatus.

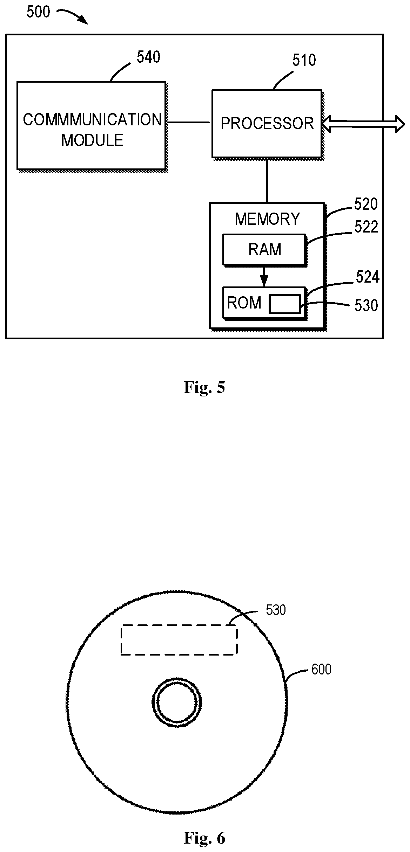

Fig. 5 is a simplified block diagram of a device 500 that is suitable for implementing examples. The device 500 may be provided to implement a communication device, for example, the first device 110, second device 120, or third device 130 as shown in Fig. 1. As shown, the device 500 includes one or more processors 510, one or more memories 520 coupled to the processor 510, and one or more communication modules 540 coupled to the processor 510.

The communication module 540 is for bidirectional communications. The communication module 540 has one or more communication interfaces to facilitate communication with one or more other modules or devices. The communication interfaces may represent any interface that is necessary for communication with other network elements. In some examples, the communication module 540 may include at least one antenna.

The processor 510 may be of any type suitable to the local technical network and may include one or more of the following: general purpose computers, special purpose computers, microprocessors, digital signal processors (DSPs) and processors based on multicore processor architecture, as non-limiting examples. The device 500 may have multiple processors, such as an application specific integrated circuit chip that is slaved in time to a clock which synchronizes the main processor.

The memory 520 may include one or more non-volatile memories and one or more volatile memories. Examples of the non-volatile memories include, but are not limited to, a Read Only Memory (ROM) 524, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 522 and other volatile memories that will not last in the power-down duration.

A computer program 530 includes computer executable instructions that are executed by the associated processor 510. The program 530 may be stored in the memory, e.g., ROM 524. The processor 510 may perform any suitable actions and processing by loading the program 530 into the RAM 522.

The examplesmay be implemented by means of the program 530 so that the device 500 may perform any process of the disclosure as discussed with reference to Figs. 2 to 4. The examples of the present disclosure may also be implemented by hardware or by a combination of software and hardware.

In some examples, the program 530 may be tangibly contained in a computer readable medium which may be included in the device 500 (such as in the memory 520) or other storage devices that are accessible by the device 500. The device 500 may load the program 530 from the computer readable medium to the RAM 522 for execution. The computer readable medium may include any types of tangible non-volatile storage, such as ROM, EPROM, a flash memory, a hard disk, CD, DVD, and the like. Fig. 6 shows an example of the computer readable medium 600 which may be in form of CD, DVD or other optical storage disk. The computer readable medium has the program 530 stored thereon.

Generally, various examples of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of examples of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target physical or virtual processor, to carry out any of the methods as described above with reference to Figs. 3 to 7. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

1.  A first device (110) comprising means for:

    receiving (225) positioning configuration information from a second device (120) serving the first device, the positioning configuration information at least indicating a target device (202) to which a positioning reference signal is to be transmitted by the first device (110) and a resource allocated for transmission of the positioning reference signal to the target device (202);
    determining (230) a first power control parameter based on a received power of data transmission expected by the target device (202), the first power control parameter indicating a received power of the positioning reference signal expected by the target device (202); and
    determining (235), at least based on the first power control parameter, a transmit power for transmission of the positioning reference signal to the target device (202) using the allocated resource;

    wherein the positioning configuration information further indicates a group of devices comprising the target device; and the first device (110) further comprising means for performing at least one of the following:

    in accordance with a determination that the target device (202) is an anchor device in the group of devices, determining transmit powers for transmission of the positioning reference signal to the group of devices to be equal to the transmit power determined for the target device (202);
    in accordance with a determination that the target device is the anchor device, transmitting the positioning reference signal to the group of devices using the resource allocated for the target device (202); and
    transmitting the positioning reference signal to the group of devices with a same beam.

2.  The first device (110) of claim 1 further comprising means for

    determining a path loss between the first device (110) and the target device (202) based on one of the following:

    measurement of a first reference signal in a synchronization signal block used to obtain system broadcast information from the target device (202), and
    measurement of a second reference signal from the target device (202), the second reference signal being indicated in spatial relation information associated with the target device;

    determining a second power control parameter based on the measured path loss; and
    determining the transmit power further based on the second power control parameter.

3.  The first device (110) of claim 1 or 2 further comprising means for

    receiving, from the second device (120), an indication of a maximum transmit power for transmission of the positioning reference signal to the target device (202) using the allocated resource; and
    determining the transmit power such that the determined transmit power is less than or equal to the maximum transmit power.

4.  The first device (110) of any of claims 1 to 3 further comprising means for :

    receiving, from the second device (120), an indication of a power offset associated with the target device (202); and
    determining the first power control parameter by adding the power offset to the received power of data transmission expected by the target device (202).

5.  The first device (110) of any of claims 1 to 4 further comprising means for

    decoding system broadcast information from the target device (202); and
    obtaining the received power of data transmission expected by the target device (202) from the decoded system broadcast information.

6.  The first device (110)of any of claims 1 to 4 further comprising means for

determining the received power of data transmission expected by the target device (202) to be equal to a received power of data transmission expected by the second device (120),
wherein the received power of data transmission expected by the second device (120) is obtained from decoded system broadcast information from the second device (120).

7. The first device (110) of any of claims 1 to 6 further comprising means for

determining a first beam for reception of system broadcast information from the target device (202); and
determining a second beam for transmission of the positioning reference signal to the target device (202) based on the determined first beam.

8. A method comprising:

receiving (225), at a first device (110), positioning configuration information from a second device (120) serving the first device, the positioning configuration information at least indicating a target device (202) to which a positioning reference signal is to be transmitted by the first device (110) and a resource allocated for transmission of the positioning reference signal to the target device (202);
determining (230) a first power control parameter based on a received power of data transmission expected by the target device (202), the first power control parameter indicating a received power of the positioning reference signal expected by the target device; and
determining (235), at least based on the first power control parameter, a transmit power for transmission of the positioning reference signal to the target device (202) using the allocated resource;
wherein the positioning configuration information further indicates a group of devices comprising the target device (202); and the method further comprising:

in accordance with a determination that the target device (202) is an anchor device in the group of devices, determining transmit powers for transmission of the positioning reference signal to the group of devices to be equal to the transmit power determined for the target device (202);
in accordance with a determination that the target device (202) is the anchor device, transmitting the positioning reference signal to the group of devices using the resource allocated for the target device; and
transmitting the positioning reference signal to the group of devices with a same beam.

9. A computer readable medium comprising program instructions for causing an apparatus to perform at least the method of claim 8.

**Patentansprüche**

1. Erste Vorrichtung (110), die Mittel für Folgendes umfasst:

Empfangen (225) von Positionsbestimmungsauslegungsinformationen von einer zweiten Vorrichtung (120), die die erste Vorrichtung bedient, wobei die Positionsbestimmungsauslegungsinformationen mindestens eine Zielvorrichtung (202), zu der ein Positionsbestimmungsreferenzsignal von der ersten Vorrichtung (110) zu übertragen ist, und eine Ressource, die für eine Übertragung des Positionierungsreferenzsignals zur Zielvorrichtung (202) zugeteilt ist, anzeigt;
Bestimmen (230) eines ersten Leistungssteuerparameters auf Basis einer Empfangsleistung einer Datenübertragung, die von der Zielvorrichtung (202) erwartet wird, wobei der erste Leistungssteuerparameter eine Empfangsleistung des Positionsbestimmungsreferenzsignals anzeigt, die von der Zielvorrichtung (202) erwartet wird; und
Bestimmen (235) einer Sendeleistung zur Übertragung des Positionsbestimmungsreferenzsignals zur Zielvorrichtung (202) mindestens auf Basis des ersten Leistungssteuerparameters unter Verwendung der zugeteilten Ressource;
wobei die Positionsbestimmungsauslegungsinformationen ferner eine Gruppe von Vorrichtungen anzeigen, die die Zielvorrichtung umfasst; und wobei die erste Vorrichtung (110) ferner Mittel zum Durchführen von mindestens einem von Folgendem umfasst:

gemäß einer Bestimmung, dass die Zielvorrichtung (202) eine Ankervorrichtung in der Gruppe von Vorrichtungen ist, Bestimmen, dass Sendeleistungen für eine Übertragung des Positionsbestimmungsreferenzsignals zur Gruppe von Vorrichtungen gleich der für die Zielvorrichtung (202) bestimmten Sendeleistung ist;

gemäß einer Bestimmung, dass die Zielvorrichtung die Ankervorrichtung ist, Übertragen des Positionsbestimmungsreferenzsignals unter Verwendung der für die Zielvorrichtung (202) zugeteilten Ressource zur Gruppe von Vorrichtungen; und

Übertragen des Positionsbestimmungsreferenzsignals mit einem selben Strahl zur Gruppe von Vorrichtungen.

2. Erste Vorrichtung (110) nach Anspruch 1, die ferner Mittel für Folgendes umfasst

Bestimmen eines Pfadverlusts zwischen der ersten Vorrichtung (110) und der Zielvorrichtung (202) auf Basis von einem von Folgendem:

Messung eines ersten Referenzsignals in einem Synchronisationssignalblock, der verwendet wird, um Systembroadcastinformationen von der Zielvorrichtung (202) zu erhalten, und
Messung eines zweiten Referenzsignals von der Zielvorrichtung (202), wobei das zweite Referenzsignal in Raumbeziehungsinformationen, die mit der Zielvorrichtung verknüpft sind, angezeigt wird;
Bestimmen eines zweiten Leistungssteuerparameters auf Basis des gemessenen Pfadverlusts; und
Bestimmen der Sendeleistung ferner auf Basis des zweiten Leistungssteuerparameters.

3. Erste Vorrichtung (110) nach Anspruch 1 oder 2, die ferner Mittel für Folgendes umfasst

Empfangen einer Anzeige einer maximalen Sendeleistung zur Übertragung des Positionsbestimmungsreferenzsignals unter Verwendung der zugeteilten Ressource zur Zielvorrichtung (202) von der zweiten Vorrichtung (120); und
Bestimmen der Sendeleistung derart, dass die bestimmte Sendeleistung kleiner als oder gleich der maximalen Sendeleistung ist.

4. Erste Vorrichtung (110) nach einem der Ansprüche 1 bis 3, die ferner Mittel für Folgendes umfasst:

Empfangen einer Anzeige eines Leistungsversatzes, der mit der Zielvorrichtung (202) verknüpft ist, von der zweiten Vorrichtung (120); und
Bestimmen des ersten Leistungssteuerparameters durch Hinzufügen des Leistungsversatzes zur Empfangsleistung einer Datenübertragung, die von der Zielvorrichtung (202) erwartet wird.

5. Erste Vorrichtung (110) nach einem der Ansprüche 1 bis 4, die ferner Mittel für Folgendes umfasst

Decodieren von Systembroadcastinformationen von der Zielvorrichtung (202); und
Erhalten der Empfangsleistung für eine Datenübertragung, die von der Zielvorrichtung (202) erwartet wird, aus den decodierten Systembroadcastinformationen.

6. Erste Vorrichtung (110) nach einem der Ansprüche 1 bis 4, die ferner Mittel für Folgendes umfasst

Bestimmen, dass die Empfangsleistung einer Datenübertragung, die von der Zielvorrichtung (202) erwartet wird, gleich einer Empfangsleistung einer Datenübertragung ist, die von der zweiten Vorrichtung (120) erwartet wird, wobei die Empfangsleistung einer Datenübertragung, die von der zweiten Vorrichtung (120) erwartet wird, aus decodierten Systembroadcastinformationen von der zweiten Vorrichtung (120) erhalten wird.

7. Erste Vorrichtung (110) nach einem der Ansprüche 1 bis 6, die ferner Mittel für Folgendes umfasst

Bestimmen eines ersten Strahls für einen Empfang von Systembroadcastinformationen von der Zielvorrichtung (202); und
Bestimmen eines zweiten Strahls für eine Übertragung des Positionsbestimmungsreferenzsignals auf Basis des bestimmten ersten Strahls zur Zielvorrichtung (202).

8. Verfahren, das Folgendes umfasst:

Empfangen (225) von Positionsbestimmungsauslegungsinformationen an einer ersten Vorrichtung (110) von einer zweiten Vorrichtung (120), die die erste Vorrichtung bedient, wobei die Positionsbestimmungsauslegungsinformationen mindestens eine Zielvorrichtung (202), zu der ein Positionsbestimmungsreferenzsignal von der ersten Vorrichtung (110) zu übertragen ist, und eine Ressource, die für eine Übertragung des Positionierungsreferenzsignals zur Zielvorrichtung (202) zugeteilt ist, anzeigt;

Bestimmen (230) eines ersten Leistungssteuerparameters auf Basis einer Empfangsleistung einer Datenübertragung, die von der Zielvorrichtung (202) erwartet wird, wobei der erste Leistungssteuerparameter eine Empfangsleistung des Positionsbestimmungsreferenzsignals anzeigt, die von der Zielvorrichtung erwartet wird; und

Bestimmen (235) einer Sendeleistung zur Übertragung des Positionsbestimmungsreferenzsignals zur Zielvorrichtung (202) mindestens auf Basis des ersten Leistungssteuerparameters unter Verwendung der zugeteilten Ressource;

wobei die Positionsbestimmungsauslegungsinformationen ferner eine Gruppe von Vorrichtungen anzeigen, die die Zielvorrichtung (202) umfasst; und wobei das Verfahren ferner Folgendes umfasst:

gemäß einer Bestimmung, dass die Zielvorrichtung (202) eine Ankervorrichtung in der Gruppe von Vorrichtungen ist, Bestimmen, dass Sendeleistungen für eine Übertragung des Positionsbestimmungsreferenzsignals zur Gruppe von Vorrichtungen gleich der für die Zielvorrichtung (202) bestimmten Sendeleistung ist;

gemäß einer Bestimmung, dass die Zielvorrichtung (202) die Ankervorrichtung ist, Übertragen des Positionsbestimmungsreferenzsignals unter Verwendung der für die Zielvorrichtung zugeteilten Ressource zur Gruppe von Vorrichtungen; und

Übertragen des Positionsbestimmungsreferenzsignals mit einem selben Strahl zur Gruppe von Vorrichtungen.

9. Computerlesbares Medium, das Programmanweisungen zum Veranlassen einer Vorrichtung, mindestens das Verfahren nach Anspruch 8 durchzuführen, umfasst.

## Revendications

1. Premier dispositif (110) comprenant des moyens pour :

recevoir (225) des informations de configuration de positionnement d'un deuxième dispositif (120) desservant le premier dispositif, les informations de configuration de positionnement indiquant au moins un dispositif cible (202) auquel un signal de référence de positionnement doit être transmis par le premier dispositif (110) et une ressource allouée pour la transmission du signal de référence de positionnement au dispositif cible (202) ;

déterminer (230) un premier paramètre de contrôle de puissance sur la base d'une puissance reçue de transmission de données attendue par le dispositif cible (202), le premier paramètre de contrôle de puissance indiquant une puissance reçue du signal de référence de positionnement attendue par le dispositif cible (202) ; et

en se basant au moins sur le premier paramètre de contrôle de puissance, déterminer (235) une puissance de transmission pour la transmission du signal de référence de positionnement au dispositif cible (202) en utilisant la ressource allouée ;

dans lequel les informations de configuration de positionnement indiquent en outre un groupe de dispositifs comprenant le dispositif cible ; et le premier dispositif (110) comprenant en outre des moyens pour réaliser au moins l'une des opérations suivantes :

conformément à une détermination du fait que le dispositif cible (202) est un dispositif d'ancrage dans le groupe de dispositifs, déterminer des puissances de transmission pour la transmission du signal de référence de positionnement au groupe de dispositifs comme égales à la puissance de transmission déterminée pour le dispositif cible (202) ;

conformément à une détermination du fait que le dispositif cible est le dispositif d'ancrage, transmettre le signal de référence de positionnement au groupe de dispositifs en utilisant la ressource allouée pour le dispositif cible (202) ; et

transmettre le signal de référence de positionnement au groupe de dispositifs avec un même faisceau.

2. Premier dispositif (110) selon la revendication 1, comprenant en outre des moyens pour

déterminer une perte de chemin entre le premier dispositif (110) et le dispositif cible (202) sur la base de l'une des mesures suivantes :

la mesure d'un premier signal de référence dans un bloc de signaux de synchronisation utilisé pour obtenir des informations de diffusion système du dispositif cible (202), et

la mesure d'un deuxième signal de référence du dispositif cible (202), le deuxième signal de référence étant indiqué dans des informations de relation spatiale associées au dispositif cible ;

déterminer un deuxième paramètre de contrôle de puissance sur la base de la perte de chemin mesurée ; et déterminer en outre la puissance de transmission sur la base du deuxième paramètre de contrôle de puissance.

3. Premier dispositif (110) selon la revendication 1 ou 2, comprenant en outre des moyens pour

recevoir du deuxième dispositif (120) une indication d'une puissance de transmission maximale pour la transmission du signal de référence de positionnement au dispositif cible (202) en utilisant la ressource allouée ; et

déterminer la puissance de transmission de sorte que la puissance de transmission déterminée soit inférieure ou égale à la puissance de transmission maximale.

4. Premier dispositif (110) selon l'une des revendications 1 à 3, comprenant en outre des moyens pour :

recevoir du deuxième dispositif (120) une indication d'un décalage de puissance associé au dispositif cible (202) ; et

déterminer le premier paramètre de contrôle de puissance en ajoutant le décalage de puissance à la puissance reçue de transmission de données attendue par le dispositif cible (202).

5. Premier dispositif (110) selon l'une des revendications 1 à 4, comprenant en outre des moyens pour

décoder des informations de diffusion système du dispositif cible (202) ; et

obtenir la puissance reçue de transmission de données attendue par le dispositif cible (202) à partir des informations de diffusion système décodées.

6. Premier dispositif (110) selon l'une des revendications 1 à 4, comprenant en outre des moyens pour

déterminer la puissance reçue de transmission de données attendue par le dispositif cible (202) comme égale à une puissance reçue de transmission de données attendue par la deuxième dispositif (120),

dans lequel la puissance reçue de transmission de données attendue par le deuxième dispositif (120) est obtenue à partir d'informations de diffusion système décodées du deuxième dispositif (120).

7. Premier dispositif (110) selon l'une des revendications 1 à 6, comprenant en outre des moyens pour déterminer un premier faisceau pour la réception d'informations de diffusion système en provenance du dispositif cible (202) ; et déterminer un deuxième faisceau pour la transmission du signal de référence de positionnement au dispositif cible (202) sur la base du premier faisceau déterminé.

8. Procédé comprenant les étapes suivantes :

recevoir (225), au niveau d'un premier dispositif (110), des informations de configuration de positionnement d'un deuxième dispositif (120) desservant le premier dispositif, les informations de configuration de positionnement indiquant au moins un dispositif cible (202) auquel un signal de référence de positionnement doit être transmis par le premier dispositif (110) et une ressource allouée pour la transmission du signal de référence de positionnement au dispositif cible (202) ;

déterminer (230) un premier paramètre de contrôle de puissance sur la base d'une puissance reçue de transmission de données attendue par le dispositif cible (202), le premier paramètre de contrôle de puissance indiquant une puissance reçue du signal de référence de positionnement attendue par le dispositif cible ; et

en se basant au moins sur le premier paramètre de contrôle de puissance, déterminer (235) une puissance de transmission pour la transmission du signal de référence de positionnement au dispositif cible (202) en utilisant la ressource allouée ;

dans lequel les informations de configuration de positionnement indiquent en outre un groupe de dispositifs comprenant le dispositif cible (202) ; et le procédé comprenant en outre les étapes suivantes :

conformément à une détermination du fait que le dispositif cible (202) est un dispositif d'ancrage dans le groupe de dispositifs, déterminer des puissances de transmission pour la transmission du signal de référence de positionnement au groupe de dispositifs comme égales à la puissance de transmission déterminée pour le dispositif cible (202) ;

conformément à une détermination du fait que le dispositif cible (202) est le dispositif d'ancrage, transmettre le signal de référence de positionnement au groupe de dispositifs en utilisant la ressource allouée pour le dispositif cible ; et

transmettre le signal de référence de positionnement au groupe de dispositifs avec un même faisceau.

9. Support lisible par ordinateur comprenant des instructions de programme pour amener un appareil à réaliser au moins le procédé de la revendication 8.

**Fig. 1**

**Fig. 2**

300

310

RECEIVE POSITIONING CONFIGURATION INFORMATION FROM A SECOND DEVICE SERVING THE FIRST DEVICE

320

DETERMINE A FIRST POWER CONTROL PARAMETER BASED ON A RECEIVED POWER OF DATA TRANSMISSION EXPECTED BY THE TARGET DEVICE

330

DETERMINE, AT LEAST BASED ON THE FIRST POWER CONTROL PARAMETER, A TRANSMIT POWER FOR TRANSMISSION OF THE POSITIONING REFERENCE SIGNAL TO THE TARGET DEVICE USING THE ALLOCATED RESOURCE

**Fig. 3**

400

410

RECEIVE, FROM A THIRD DEVICE, POSITIONING ASSISTANCE INFORMATION INDICATING A TARGET DEVICE TO WHICH A POSITIONING REFERENCE SIGNAL IS TO BE TRANSMITTED BY A FIRST DEVICE

420

ALLOCATE A RESOURCE TO THE FIRST DEVICE FOR TRANSMISSION OF THE POSITIONING REFERENCE SIGNAL TO THE TARGET DEVICE

430

TRANSMIT POSITIONING CONFIGURATION INFORMATION TO THE FIRST DEVICE, THE POSITIONING CONFIGURATION INFORMATION INDICATING THE TARGET DEVICE AND THE RESOURCE ALLOCATED FOR TRANSMISSION OF THE POSITIONING REFERENCE SIGNAL TO THE TARGET DEVICE

**Fig. 4**

500

540 510

COMMMUNICATION
MODULE

PROCESSOR

520
MEMORY
522
RAM

524
ROM
530

**Fig. 5**

530

600

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **VIVO**. Remaining issues on UL RS design for NR positioning. *3GPP DRAFT; R1-1913424, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE*, 25 November 2019, vol. RAN WG1 (Reno)

- 3 Generation Partnership Project; Technical Specification Group Radio Access Network; Evolved Universal Terrestrial Radio Access (E-UTRA); Physical layer procedures (Release 16). *3GPP STANDARD; TECHNICAL SPECIFICATION; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE*, 14 January 2020, vol. RAN WG1, 8-59

- **QUALCOMM INCORPORATED**. Comparison of 5GC-LMF and RAN-LMC based Positioning. *3GPP DRAFT; R3-195824_(LOCAL LMF BENEFITS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 04 October 2019, vol. RAN WG3 (Chongqing)